# EUROPEAN PATENT APPLICATION

(11) **EP 4 513 861 A1**
(43) Date of publication of application: **26.02.2025**
(21) Application number: 23192546.2
(22) Date of filing: 22.08.2023
(51) Int. Cl.: H04L 67/52, A47G 29/12, G06Q 10/08, H04W 4/02, H04W 4/80

(54) **DEVICE, METHODS AND PLATFORM FOR UNADDRESSED MAIL DIGITAL DISTRIBUTION AND DELIVERY BASED ON INTERNET OF THINGS AND NEAR FIELD COMMUNICATION TECHNOLOGIES**

(71) Applicant: 800.IA, 75016 Paris (FR)
(72) Inventor: Oumina, Hanane-Ezzahra, 75016 Paris (FR)

(57) **Abstract**

The present invention discloses a device, methods and a platform that provide the distribution and the delivery of unaddressed mail to physical mailboxes in a digital format, using Internet of Things (IoT) enabled public mobile network and near field communication technology (NFC) available in user personal devices. An electronic device is placed inside the physical mailbox, this device communicates with the platform through IoT technology and communicates with user personal devices with NFC technology. The advertising entity defines its unaddressed mail campaign using a dedicated graphical user interface provided by the platform, which collects and aggregates the campaign requests of the advertising entities and performs digital campaign scheduling and generates a single digital letter for each device, then the platform sends DSLs to the devices using IoT network. The resident fetches the digital unaddressed mail using a personal user device by activating NFC feature and bringing the mobile phone near the device inside the physical mailbox without need of any personal data.

## Description

### FIELD OF THE INVENTION

This present disclosure relates in general to the domain of the distribution and the delivery of unaddressed mail, more specifically, the present disclosure relates to a device, methods and a platform for distributing unaddressed mail in digital format inside physical mailboxes using Internet of Things and Near Field Communication technologies.

### STATE OF ART

Unaddressed mail is an efficient way for publicity and communication used by businesses and institutions. Residents use this way of communication for, to just name a few, getting informed about the goods retailers, catalogue and promotions, getting informed about the new businesses in the neighbourhood, getting informed about the social events in the city or donation campaigns. Also, small businesses and individual businesses find unaddressed mail effective in getting known in their area, to attract prospects and business opportunities, to enhance their sales and to inform about new activities.

However, unaddressed mail uses a big amount of paper, plastic, water and energy for its production and printing and its distribution and delivery and its collection and recycling, which leads to air and water pollution and deforestation. Governments and people are increasingly aware of this negative impact and some regulations are set aiming at reducing the distribution of paper-based and plastic-based unaddressed mail and at enhancing the recycling. These last solutions reduce at the same time the capability of businesses and institutions to inform and advertise, and this could impact their global activity.

Some solutions have emerged, for years now, as a substitution of paper and plastic unaddressed mail based on electronic newsletters, social media advertising solutions and web browsing advertising solutions. However, these methods involve personal data of people, email address or/and mobile phone number or/and social media account and behavioural information gathered in cookies and location information. Not all people like to share their personal information and not all people like to receive information and publicity all time by phone or email or while browsing websites. Also, not all people want to be present and active in social media. From businesses perspective, solutions based on personal data is not always affordable for local small businesses, and not always suitable to focus on small geographical areas where a small business would like to get known or where an institution would like to spread an information like electricity cut for maintenance, road blocking for civil works or a donation campaign.

Therefore, there is a need for a solution that distributes unaddressed mail in a digital format to eliminate the negative impact on environment and based on the physical mailbox to keep advertising and information target relevance without resident personal data requirements, using existing public mobile network infrastructure and Internet of things (IoT) technology and existing communication technology between devices using near field communication (NFC) technology.

### SUMMARY

The present invention discloses a device, methods and a platform that provide the distribution and the delivery of unaddressed mail to physical mailboxes in a digital format, using Internet of Things (IoT) enabled public mobile network and near field communication technology (NFC) available in user personal devices.

The advertising entity defines its unaddressed mail campaign using a dedicated user graphical interface provided by the platform, by setting the type of media to be used for the campaign, text, photo or video, and it chooses also actions that could be actioned in the media, some actions could be saving media, clicking to redirect to a webpage or clicking to call. The advertising entity configures also the campaign parameters that are at least the geographic location, the period of the campaign, the recurrence of the campaign.

The platform collects and aggregates the campaigns requests of the advertising entities, performs digital campaign scheduling and generates single digital letters (DSL) for each device registered in the platform. A single digital letter is representing the set of all unaddressed mail sent to the physical mailbox in a defined time period. Then, the platform distributes on a regular basis the digital unaddressed mail to the devices that are eligible for reception, the eligibility is decided at each time based on a number of parameters that are and not limited to access to mobile network, location accuracy.

An electronic device is placed inside the physical mailbox, this device communicates with the platform through the public cellular network with IoT technology and communicates with user personal devices with NFC technology.

The resident fetches the unaddressed mail using a personal user device that could be a mobile phone, by activating NFC feature and bringing the mobile phone near the device inside the physical mailbox, automatically the mobile phone displays the link to the single digital letter or opens the mobile application provided by the platform designed to read DSL. This mobile application does not need user personal information to allow unaddressed mail letter display.

The platform provides reporting and monitoring features for the advertising entities to have a view about the distribution status of their campaigns. The platform provides monitoring and management features for all devices put inside the physical mailboxes.

The invention is advantageous for the environment because it reduces paper and plastic, distribution, delivery and recycle energy, it is advantageous for businesses and institutions, because they can advertise and inform as usual with direct and unaddrassed mail approach and get benefits of enhanced forms of unaddressed digital mail including video and actions on the media. Moreover, businesses and institutions have the benefit of a short distribution cycle and better control and reporting on their campaigns.

The invention is beneficial for residents because their mailboxes will not be flooded by paper anymore with this solution in place, there will be less frauds of mailboxes due to reducing number of interventions on mailboxes, and they will stay informed about the businesses and the activities around their homes, without providing their personal data, while contributing on efforts to reduce environmental impact of human activity.

Nonetheless, it is to be appreciated that many aspects of the present invention are also equally applicable to other like applications, devices, and methods of implementation. The distribution of unaddressed mail is just one of the scenarios of use of this invention, that could be used for the distribution of any information that is changing over time and that needs to be delivered in different environments of connectivity, power supply and accessibility capabilities.

### BRIEF DESCRIPTION OF FIGURES

Figure 1 shows an embodiment of the present disclosure together with external existing environment of the network and physical mailbox.
Figure 2 depicts an example of embodiment of the electronic device to be placed inside the physical mailbox and its various components.
Figure 3 depicts an example of embodiment of the platform and its various core functions.
Figure 4 depicts examples of interactions and messages between the platform and the device.
Figure 5 depicts an example of delivery of unaddressed mail involving the device, the resident user device, the platform and external application servers.
Figure 6 depicts an example of embodiment of campaign creation and configuration method on the dedicated user graphical interface included in the platform.
Figure 7 depicts an example of embodiment of anti-data corruption mechanism method included in the device and triggered by events of usage or by the platform.

### DETAILED DESCRIPTION

The following description is intended to convey a thorough understanding of the invention by providing description, details and example embodiments used to describe the principles of the distribution and delivery of unaddressed mail in digital format with the platform, the device and methods subject of the present disclosure.

Before undertaking the detailed description below, it may be advantageous to set forth definitions of some words and phrases used in this document: the terms "include", "comprise", "provides" and "performs" as well as derivatives, mean inclusion without limitation; the term "or," is inclusive, meaning and/or; the phrases "embedded in" "communicating with" as well as derivatives may mean to include, be included within, interconnect with, contain, be contained within, connect to or with, couple to or with, be communicable with, cooperate with, have, have a property of, have the function of or the like; and the terms "application", "program" "module" refer to one or more computer programs, software components, sets of instructions, procedures, functions, objects, classes, instances, related data, or a portion adapted for implementation in a suitable computer readable program code, also, different functions described below can be implemented or supported by one or more computer programs, each of which is formed from computer readable program code and embodied in a computer readable medium; and the term "device" means an electronic device made of one or more processors and one or more memory and one or more antennas, and one or more software program, "user device" means any user device used by a physical person that is capable of connecting to internet through mobile network, wired network or Wi-Fi, it could be mobile phone, pad, computer, or the like.

The figures and the current description in this disclosure is using the mobile smart phone as user device in some examples of implementation and it is not intended to limit the use to other user devices or limit the scope of the disclosure to an implementation on mobile smart phone.

As is traditional in the field, embodiments may be described and illustrated in terms of blocks which carry out a described function. These blocks, which may be referred to herein as managers, units, modules, hardware, components, features or the like, are physically implemented by analogic and/or digital circuits such as integrated circuits, microprocessors, microcontrollers, memory circuits, optical components, hardwired circuits and the like, and may be driven by a firmware. Also, descriptions of well-known components and processing techniques like business account creation or near filed communication technique are omitted to not obscure the description of the disclosure.

The accompanying drawings and figures are used to help easily understand various technical features, and it should be understood that the embodiments presented herein are not limited by the accompanying drawings. as such, the present disclosure should be understood to extend to any alterations, equivalents and substitutes in addition to those which are particularly set out in the accompanying drawings.

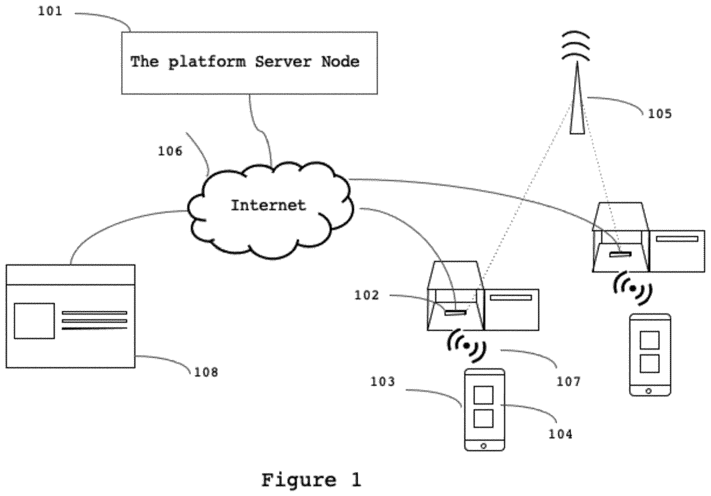

Figures 1 to 7, discussed below, and the various embodiments used to describe the principles of the present disclosure in this patent document are by the way of illustration only and should not be used in any way to limit the scope of the disclosure. Accordingly, the embodiment herein provides an electronic device designated here as "the device", methods and platform for distributing and delivering unaddressed mail in a digital format.

Figure 1 describes the global picture of the invention and the interaction of its different parts with the external environment to execute the objective of the invention. The device 102 is communicating with the platform server node 101 through Internet of Things capable public mobile network 105 and public Internet network 106, that may be one or more of a wireless network, a wired network or any combination of wireless and wired network, and may include technologies of optical networks, wireless networks, local access networks (LAN), satellite networks, cellular mobile networks, personal area network, wireless fidelity networks (Wi-Fi).

The platform server node 101 could be implemented in one single location or its various functions could be distributed in different locations based on the implementation needs, according to the industry standards and their evolution. The platform Central Node 101 could be hosted in a standalone server or in secure cloud servers, and it comprises number of modules and components that execute the core functions of the platform.

The device 102 is placed inside the mailbox, any existing mailbox could host the device. The device 102 could be autonomous in terms of energy for many years with an autonomy battery or could be powered by different types of power supply like solar energy or public electric network.

The device 102 has a form factor to take a minimum space on the mailbox and not disturb other functions of the physical mailbox like receiving parcels and mail, while performing the function of digital unaddressed mail distribution and the device is installed inside the mailbox to fluent the unaddressed mail delivery. The device 102 is installed in a way that could not be removed without special equipment and method that are not described in this document. The device has the capability to communicate with user device 103 with near field communication protocol 107.

In an embodiment, the user device is a mobile smart phone 103 that has the capability of NFC to communicate with the device 102, the user activates the NFC capability and approaches the phone from the device, the NFC memory of the device is read which triggers automatically opening the unaddressed mail graphical user interface 104, that could be presented as a webpage, or mobile application provided by the platform. Reading the device NFC memory could trigger request to open the web browser or request to download and install the application from applications stores, based on the status of the graphical user interface in the user device. The user device will have then a connection with the platform server node 101 though mobile network or Wi-Fi to see the single digital letter in the graphical user interface.

The unaddressed mail graphical user interface 104 does not need to have a user account or provide personal information to read the unaddressed mail, it allows to have a good presentation of the unaddressed mail and show the actions that could be performed in each unaddressed mail content.

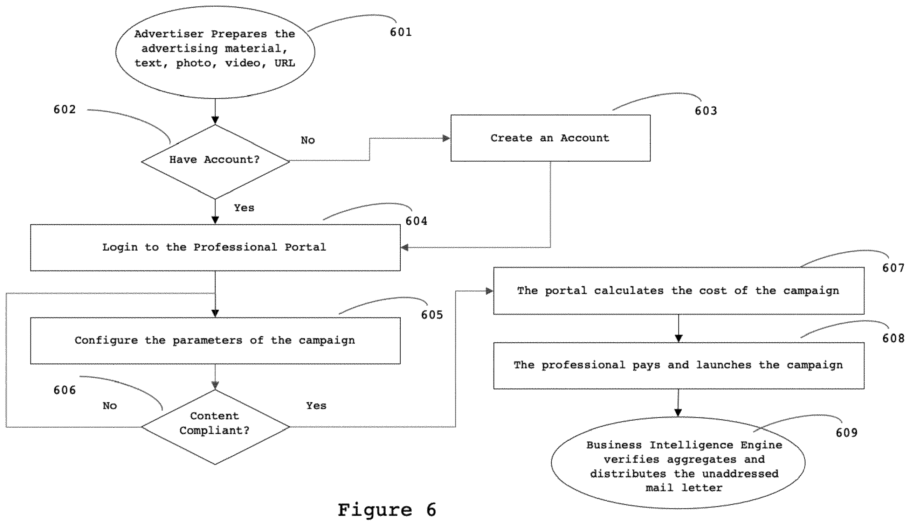

Advertising entities use a dedicated graphical interface called in this document Professionals Portal 108 to launch their advertising and communication campaigns, the Professionals portal provides the key functions of business account creation where an advertising entity opens an account in the platform, account creation process is not detailed in this description as it is following the current art. Professionals Portal 108 provides the key functions of content verification and compliance, that is done in real-time during the campaign configuration, as detailed in an example of embodiment in figure 6, the compliance includes and not limited to guidelines of legal compliance, business conduct compliance, and the platform rules of usage compliance.

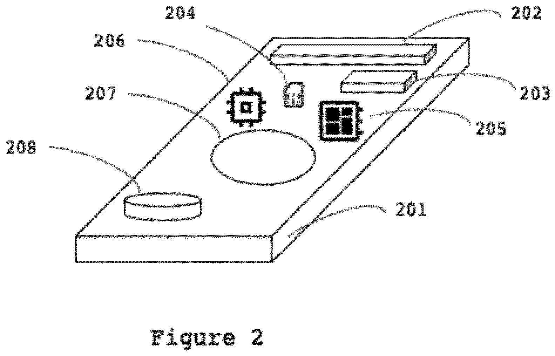

As shown in the figure 2, the device is made of electronic components, processors, memory, antennas and a software that performs several functions.

The cover 201 that protects the device components could be following different standards based on the environment where it is going to be installed, like waterproof or heatproof standards material specifications, and could be having any form factor based on the operating environment, the shield has also the function to stick inside the mailbox in a way that it is not easy to dismantle without specific tools and methods.

The device connects with the central platform though public mobile network and hence has an antenna 202 that is wide band and allows to support many types of IoT networks, the device comprises also Global Navigation Satellite System (GNSS) antenna 203 for geolocation and positioning, this allows to locate the device during the installation, troubleshooting and maintenance and in case of unexpected location change.

The device comprises Subscriber Identity Module (SIM) 204 that allows the device to be identified in the public mobile network, SIM could be hardware based or software defined and could be a unique identifier used to be authenticated in the serving IoT network.

To expose the unaddressed mail to residents, the device has the capability to communicate with near field communication protocol, the device stores the Single Digital Letter reference in the passive NFC tag 207 that could be read by any NFC enabled user device.

In an embodiment, the device is powered by an autonomous battery 208. the power supply could be provided with other ways like solar energy or public electricity network.

The device receives many types of instructions from the platform that could be for updating the unaddressed mail letter, sending management information, updating the software and these interactions trigger one or more program embedded in one or more memory 206 and they get executed in one or more processors 205.

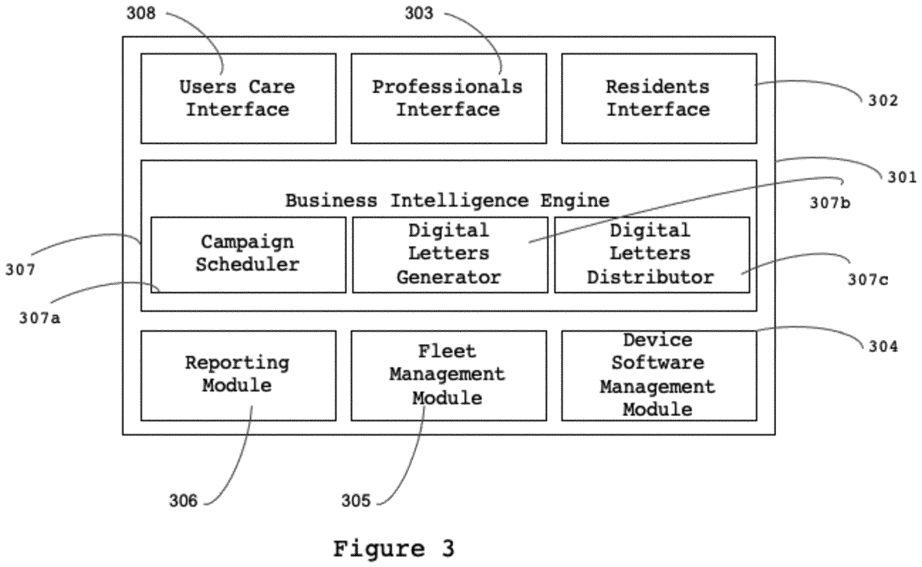

Figure 3 describes core modules and functions of the platform that ensures the distribution and the delivery of unaddressed mail in digital format, the management and the reporting of unaddressed mail digital distribution and delivery.

The platform 301 in an example of embodiment is a set of functions that are organised in modules, and each module is incorporating a set of functions that are related to each other, each module has a specific core function and could include many sub-functions related the core function.

The platform 301 could be installed in a single location or it could be distributed in different locations, it could be hosted in a standalone server or in a secure cloud computing solutions, its functions could be implemented in one single location or functions could be distributed in different locations based on the implementation needs to allow a better accessibility, serviceability and performance.

The platform 301 is connected to internet network, that may be one or more of a wireless network, a wired network or any combination of wireless and wired network, and may include technologies of optical networks wireless networks, local access network (LAN), satellite networks, cellular mobile networks, personal area network, wireless fidelity network (Wi-Fi). Implementation standards are not detailed here because it follows the existing art of platforms implementations in terms of service and performance. The platform embeds the capability to communicate with Internet of Things protocols.

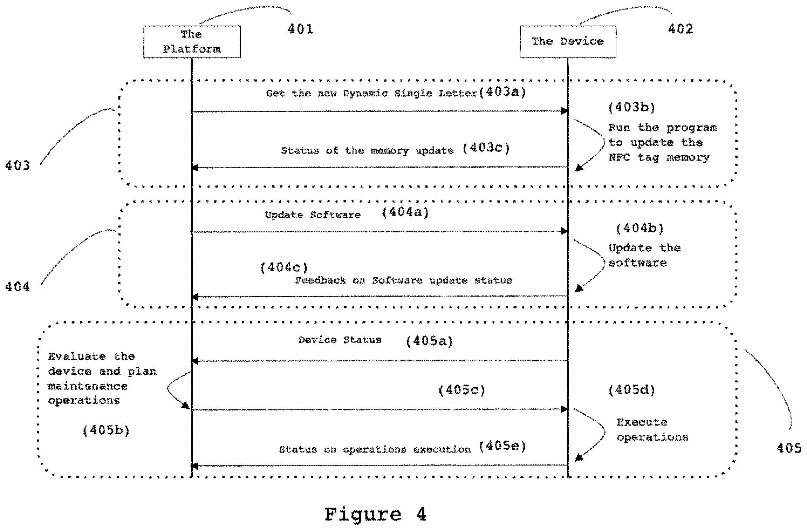

The platform 301 is having interactions with the device through IoT protocols for unaddressed mail distribution, for operations and maintenance, examples of interactions with devices are illustrated in the figure 4, the platform through one or more of its modules sends the latest unaddressed mail information to each device 403 registered in the platform, the unaddressed mail is marked as distributed, the platform through one or more of its modules performs also software updates 404 in the devices to have the latest version of firmware and security instructions and programs. Also, the platform through one or more of its modules interacts with the devices for the monitoring of its key performance indicators 405.

Professionals Interface 303 is the module that manages businesses and institutions accounts, it offers a one stop Graphical User Interface that could be web based, called in this description Professionals Portal, for professionals to launch digital unaddressed mail campaigns and get reporting of campaigns and their execution status. The Professionals Interface 303 could include functions and capabilities to enrich the advertising entities experience, that are not detailed here for the purpose of the disclosure clarity.

Figure 6 describes an example of embodiment of the method of campaign definition by the advertising entity in the Professionals Portal. The advertising entity prepares the advertising content that could be text, photo, video, or any other type of content accepted by the platform 601, and then the adverting entity logs in to the Professionals Portal, in case the advertising entity does not have an account, there will be an account creation first 603, the process of account creation is not detailed here because it is following the existing art and future evolutions, before going to the step of campaign creation. The configuration of the campaign involves other key functions in the Professionals Interface like the real-time compliance check of the content that could be and not limited to legal content compliance, and the platform terms of service compliance 606, this first level compliance is ran in real time to allow the advertising entity to complete the campaign configuration with less risk of rejection. Compliance check function is Artificial Intelligence based module in Professional Interface module 303. If the compliance check is passed, the process goes to the next steps for cost calculation 607 settlement and launch 608. The Business Intelligence Engine 307 performs a second compliance check ensure that the content is respecting the rules to be distributed in the designated location.

The Business Intelligence Engine 307 includes three core functions to perform the distribution of unaddressed mail, the Business Intelligence Engine collects all requests of distribution of unaddressed mail ordered by advertising entities, this function is performed by the Campaign Scheduler Module 307a and generates Dynamic Single Letter (DSL) for each device in the Digital Letter generator module 307b, and then the DSLs are distributed by the Digital Letters Distributor module 307c, that contacts all concerned devices as per the example of the communication embodiment 403 in figure 4, the concerned devices are decided based on eligibility mechanism that allows sending DSLs with efficiency, in case a device is not available for reception because of the network availability or any other matters that are not detailed here, the DSL will not be sent and will wait until the device becomes available. Device eligibility also depends on the device status in the platform that is decided by a set of parameters like and not limited to, its location accuracy.

The business Intelligence Engine 307 has also the function of verification and compliance of the content to ensure the quality of information distributed. this second level compliance is done in the Campaign scheduler 307a. An extended compliance check is performed on the DSLs.

The business Intelligence Engine 307 aggregates the residents, actions that are collected from the Residents Interface 302 to provide reports on campaigns for advertising entities, the reporting being anonymised and aggregated in a meaningful way to protect residents, anonymisation methods are not detailed here.

Users Care Interface 308 is the module that comprises functions to interface with residents, residents, representatives and professionals if there is a problem in the operations of the device, or the Professionals Portal.

Residents Interface 302 manages the interface and the graphical user interface used by residents to get digital unaddressed mail, it manages the unaddressed mail mobile user application in case the resident has it in the phone, suggests the installation of the application and displays in a simple presentation of a webpage the unaddressed mail. Any interface offered to the resident to read unaddressed mail does not need authentication and does not need resident personal information.

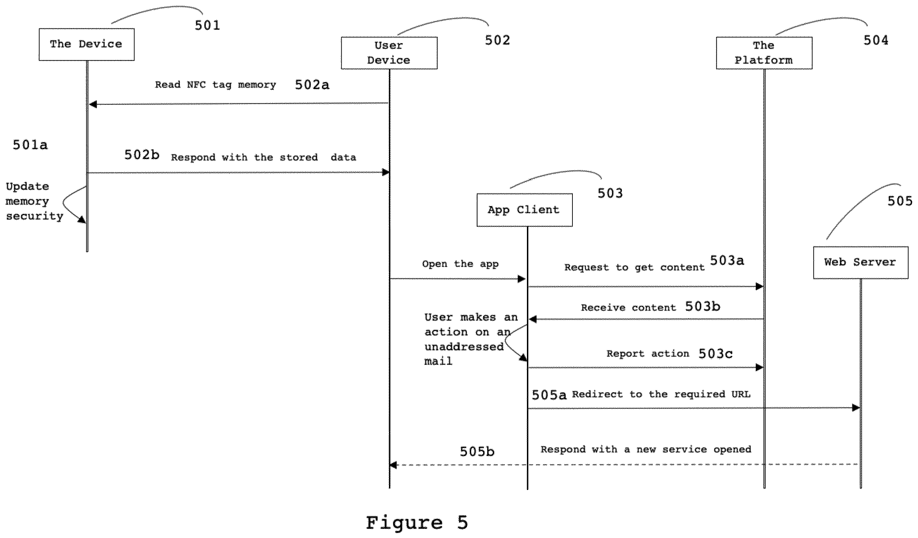

Figure 5 illustrates an example of embodiment communication flow happening between a resident and the device. The resident uses an NFC enabled user device 502 to read the unaddressed mail by approaching at a short distance from the device 501 as a response, the user device gets the stored data that triggers the opening of the unaddressed mail application 503 and the communication with the platform 504. In the application, the resident will be able to see the unaddressed mail and make actions on them, any action done by the resident is reported to the platform 504 to feed the reporting to the advertising entities in anonymous manner, and if the action requires a redirection to another application server like a website 505 or dial phone number, etc, the platform know only about the action taken and not about content exchanged afterwards or the result of the action.

Device Software Management Module 304 ensures the management of the software inside the devices and pushes the latest software to all devices and ensures security routines.

Fleet management module 305 ensures the management of the fleet of devices 102 and engages maintenance routines and processes on devices.

Reporting module 306 is the module of reporting for all the platform activity.

Figure 4 illustrates the main instructions that are exchanged between the platform and the device on a regular basis, the frequency of these instructions is not detailed here for the purpose of simplification. 403 set of messages exchange explains the communication between the platform and the device to update the Digital Single Letter, once the device receives the message 403a, it executes instructions to update the NFC memory 403b, and upon the successful execution it shares the status of the operation with the platform 403c. The platform also triggers software updates and security updates operations 404a, the device executes the programs related to the instructions 404b and feedbacks on the operations execution status to the platform 404c. The device regularly reports hardware and software key performance indicators (KPIs) to the platform 405a, the platform makes evaluation of these KPIs and generates a maintenance plan 405b that is shared with the device for execution 405c, the device executes the instructions 405d and feedbacks the status of the execution to the platform 405e.

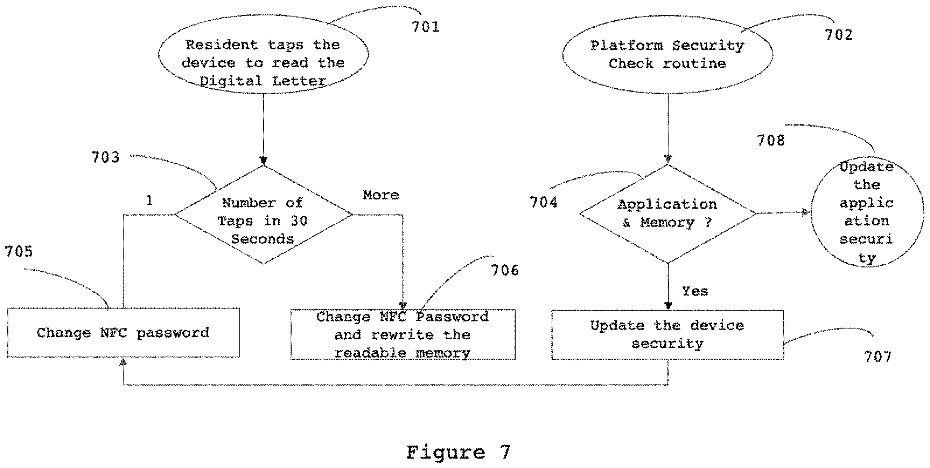

When the device is tapped by the user device to get DSL, a memory security mechanism is triggered in order to protect the memory from tampering and ensure the integrity and security of the distributed mail, figure 7 describes an example of embodiment of mechanism of data integrity protection that is implemented inside the device and executed by one or more processors 205 of the device using one or more memory 206 of the device. The password of the NFC memory is changed based on two events, upon the resident reading of the NFC tag 701 and upon the request of the platform 702. In case of 701, the password of the NFC memory is changed after each tap to avoid any risk of tampering 705, and if the device is tapped more than one time in thirty seconds, the device estimates that the risk of tampering is high, and it changes the password and rewrites the latest Digital Single Letter 706. When the platform performs security routine check and update, it could be for updating the software the hardware and the software programs security 708 including memory security and NFC tag memory 707, in this last case, the device executes the operation to update the NFC memory password 705.

## Claims

1. A device comprising: one or more processors; and one or more memories which at least one is in communication with one or more processors and storing instructions that, when executed by one or more processors, are configured to cause the device to: (a) receive an input information from a server using Internet of Things mobile network protocol, (b) update the information stored in a memory that could be read with a near field communication protocol, (c) transmit via a near field communication protocol the data received, to a near field communication capable user device (c) trigger memory protection mechanism after each tap, (d) receive management instructions from a server using Internet of Things mobile network protocol (e) transmit hardware and software status of the device to a server using Internet of Things mobile network protocol, (f) share location with a server Internet of Things mobile network protocol, (g) block the device in case of location change

2. the device as disclosed in claim 1 comprises a mobile device.

3. the device as disclosed in claim 1 comprises a location positioning system device.

4. the device as disclosed in claim 1 comprises and near field communication passive device.

5. the device as disclosed in claim 1 comprises a power supply plug that could be and not limited to an autonomy battery, a solar power supply or electricity distribution network.

6. the device as disclosed in claim 5 comprises an anti-data corruption mechanism, that is based on reading NFC memory events number and frequency.

7. A method for distributing information to a plurality of devices disclosed in claim 1, comprising (a) receiving input values representing information for distribution requests from senders, input values contain at least the set of information to be distributed, the location and the actions expected from receivers (b) aggregating requests of senders and generating a Single Digital Letter (SDL) for each device representing all information meant to be distributed in the geographical aera where a device is located, (c) maintaining the receivability status of each device that is based at least on the network access and the location check (d) sending the Single Digital Letters to devices through Internet of Things network.

8. The digital single letter disclosed in claim 7 includes at least one or more media and one or more possible actions that could be done by the receiver on each medium.

9. The method of claim 7 wherein receiving requests form senders comprises real-time compliance check and validation of input values during the request creation.

10. A method for delivering information to a user device comprising (a) writing information in a memory that is readable by near field communication technology in the device disclosed in claim 1, (b) reading DSL with a user device though near field communication protocol (c) protecting the near filed communication readable memory of the device of claim 1 with an anti-data corruption mechanism, (d) triggering connection between the user device and a server through wireless or wired network (e) collecting actions events from receivers and generating reports for each distributed information.

11. anti-data corruption mechanism as disclosed in claim 10 is based on reading NFC memory events number and frequency.

12. A platform comprising one or more processors and a memory comprising instructions that, when executed by the one or more processors, cause the platform to (a) provide a graphical user interface to receive requests of information distribution from senders, (b)aggregate requests having a device as destination and generate a single digital letter (DSL) (c) sustain the status of receivability of devices subject of claim 1, (d) provide a graphical user interface for readers of DSLs, d) collect feedback of the actions of receivers, (e) provide reports of information distribution to senders, (f) provide management and security instructions for devices.

13. The platform as disclosed in claim 12 has the capability to communicate with devices disclosed in claim 1 through mobile Internet of Things technology.

14. The platform as disclosed in claim 12 has the capability to communicate with other platforms though internet network.

15. The graphical user interface for senders as disclosed in the claim 12 communicates with the platform server side by mobile network and wireless fidelity network or any wireless or wired network capable to ensure connection to internet.

16. The graphical user interface for receivers as disclosed in the claim 12 communicates with the platform server side by mobile network and wireless fidelity network or any wireless or wired network capable to ensure connection to internet.
